# EUROPÄISCHE PATENTSCHRIFT

(11) **EP 3 750 722 B1**
(45) Veröffentlichungstag und Bekanntmachung des Hinweises auf die Patenterteilung: **19.01.2022**
(21) Anmeldenummer: 20173078.5
(22) Anmeldetag: 06.05.2020
(51) Int. Cl.: B60C 11/03, B60C 11/13

(54) **FAHRZEUGLUFTREIFEN**
PNEUMATIC TYRE
PNEUMATIQUE DE VÉHICULE

(30) Priorität: 14.06.2019 DE 102019208671
(43) Veröffentlichungstag der Anmeldung: 16.12.2020
(73) Patentinhaber: Continental Reifen Deutschland GmbH, 30165 Hannover (DE)
(72) Erfinder: Soyyuece, Atakan, 30419 Hannover (DE); Tomforde, Willem, 30419 Hannover (DE); Bartling, Oliver, 30419 Hannover (DE)
(74) Vertreter: Continental Corporation

(56) Entgegenhaltungen:
- EP-A1- 3 088 214
- DE-A1-102010 016 978
- JP-A- H0 487 805
- JP-A- 2011 084 254

## Beschreibung

Die Erfindung betrifft einen Fahrzeugluftreifen mit einem profilierten Laufstreifen mit unter einem Winkel von 0° bis 70° zur axialen Richtung verlaufenden Rillen mit zwei Rillenflanken und einem Rillengrund und mit am Rillengrund sitzenden, an die Rillenflanken angebundenen Grundanhebungen, welche jeweils durch zwei Stirnflächen und in radialer Richtung durch eine Deckfläche begrenzt sind, wobei die Deckfläche, im Querschnitt durch die jeweilige Rille betrachtet, radial nach innen gekrümmt verläuft und entlang der Rillenflanken entweder bis zur Laufstreifenperipherie reicht oder vor dieser in einem in radialer Richtung ermittelten Abstand von bis zu 2,0 mm endet.

Ein derartiger Fahrzeugluftreifen ist beispielsweise aus der JP H04 87805 A bekannt. Der Laufstreifen des Reifens weist Profilblockreihen mit durch Querrillen voneinander getrennten Profilblöcken auf, wobei in den Querrillen jeweils eine am Rillengrund sitzende, an die Rillenflanken angebundene Grundanhebung ausgebildet ist. Die Grundanhebung ist in radialer Richtung durch eine Deckfläche begrenzt, welche im Querschnitt durch die Rille betrachtet, U-förmig gekrümmt verläuft und deren seitlichen Schenkel bis zur Laufstreifenperipherie reicht. Die seitlichen Schenkel der Deckfläche schließen mit der Laufstreifenperipherie einen Winkel ein, welcher kleiner ist als der Winkel, welchen die Rillenflanken der Querrille mit der Laufstreifenperipherie einschließen, wodurch an jeder Rillenflanke eine in den Profilblock hineinragende, flache Vertiefung gebildet ist. Die Grundanhebungen sollen zu einer guten Haltbarkeit des Laufstreifens sowie zu guten Fahreigenschaften auf Schneefahrbahnen und ungepflasterten Straßen beitragen.

Aus der DE 10 2010 016 978 A1 ist ein Fahrzeugluftreifen mit einem Laufstreifen mit Profilblockreihen mit durch Querrillen getrennten Profilblöcken bekannt, wobei Querrillen vorgesehen sind, in welchen jeweils eine am Rillengrund sitzende, an die Rillenflanken angebundene Grundanhebung ausgebildet ist. Die Grundanhebung weist zumindest einen an der einen Rillenflanke angeordneten Seitenteil und einen am Rillengrund positionierten Basisteil auf, wobei diese Teile eine sattelförmige Vertiefung auf der Grundanhebung mitbilden und wobei zumindest die der Laufstreifenmitte zugewandte Seite der Grundanhebung über gerundet ausgeführte Flanken auf das Niveau des Rillengrundes abfällt. Im Bereich solcher Grundanhebungen soll eine gute Querentwässerung sichergestellt sein.

Die DE 10 2016218 980 A1 offenbart einen Fahrzeugluftreifen mit einem Laufstreifen, welcher mittlere Profilblockreihen mit Profilblöcken aufweist, welche durch Querrillen voneinander getrennt sind. Die Querrillen setzen sich aus zwei unter einem stumpfen Winkel aneinander anschließenden Abschnitten zusammen. In einem der Abschnitte ist eine Grundanhebung ausgebildet, über deren Verlauf die Tiefe der Querrille auf 40% bis 60% der Profiltiefe reduziert ist. Durch die Grundanhebung wird die Steifigkeit des Laufstreifens erhöht, wodurch Vorteile in den Handlingeigenschaften erzielt werden.

Ferner offenbart die JP 2011 084 254 A einen Fahrzeugluftreifen mit einem Laufstreifen, der ebenfalls Profilblockreihen mit Profilblöcken aufweist, welche durch Querrillen voneinander getrennt sind, wobei in den Querrillen jeweils eine Grundanhebung ausgebildet ist. In der Grundanhebung ist eine von ihrer Deckfläche ausgehende Vertiefung ausgebildet, deren Tiefe 20% bis 90% der Höhe der Grundanhebung entspricht. Solche Grundanhebungen sollen eine gute Fahrstabilität auf eisigem Untergrund und einen gleichmäßigen Laufstreifenabrieb ermöglichen.

Die US 2003/0024621 A1 offenbart einen Fahrzeugluftreifen, bei welchem in Querrillen des Laufstreifens Grundanhebungen mit zur radialen Richtung geneigten Deckflächen ausgebildet sind.

In quer oder schräg zur Umfangsrichtung orientierten Rillen von Laufstreifen ausgebildete Grundanhebungen zeigen eine abstützende Wirkung auf jene Profilelemente, beispielsweise die Profilblöcke, an deren Rillenflanken sie angebunden sind, wodurch die Stabilität des Laufstreifens erhöht wird und sich die Handlingeigenschaften des Fahrzeugluftreifens vorteilhaft beeinflussen lassen. Bei den bisher bekannten Grundanhebungen sind weiterhin, wenn auch durch die Grundanhebungen reduziert, Steifigkeitssprünge im Laufstreifen vorhanden. Da die Grundanhebungen den Rillenquerschnitt verringern, beeinträchtigen sie auch das Wasserableitvermögen der Rillen.

Der Erfindung liegt daher die Aufgabe zugrunde, bei einem Fahrzeugluftreifen der eingangs genannten Art Grundanhebungen derart zu gestalten, dass Steifigkeitssprünge effektiver als bisher reduziert werden können, wobei gleichzeitig das Wasserableitvermögen der Rillen verbessert werden soll.

Gelöst wird die gestellte Aufgabe erfindungsgemäß dadurch, dass die Deckfläche der Grundanhebungen, im Längsschnitt durch die jeweilige Rille betrachtet, radial nach innen gekrümmt verläuft.

Die Deckfläche erfindungsgemäß gestalteter Grundanhebungen reicht daher bis zur bzw. fast bis zur Laufstreifenperipherie. Dadurch und durch ihre besondere Krümmung wirken die Grundanhebungen gleichmäßig stabilisierend ohne merkliche oder ausgeprägte Steifigkeitssprünge zu verursachen. Obwohl die Deckfläche bis zur bzw. fast bis zur Laufstreifenperipherie reicht, bleibt im Bereich radial außerhalb, also oberhalb der Grundanhebungen, ein für das Wasserableitvermögen vorteilhaft hohes Rillenleervolumen erhalten.

Bei einer bevorzugten Ausführungsvariante münden mit Grundanhebungen versehene Rillen in eine weitere Rille, insbesondere eine Umfangsrille, ein, wobei die Grundanhebungen unmittelbar an den Einmündungsbereichen der Rillen zu der weiteren Rille ausgebildet sind. Durch diese Maßnahmen werden vor allem die Eckbereiche der jeweiligen Profilpositive bei den Rillenmündungen besonders wirkungsvoll abgestützt und stabilisiert. Dies ist besonders vorteilhaft, da die Eckbereiche jene Laufstreifenbereiche sind, welche beim Abrollen des Reifens am stärksten deformiert werden.

Gemäß einer weiteren bevorzugten Ausführungsvariante weist die Deckfläche der Grundanhebungen, im Querschnitt durch die jeweilige Rille betrachtet, eine von ihren radial äußeren Enden zu ihrer tiefsten Stelle zunehmende Krümmung auf. Eine derart gekrümmte Deckfläche verbessert die abstützende Wirkung der Grundanhebung und trägt derart zu einer weiteren Reduktion der Steifigkeitssprünge bei.

In diesem Zusammenhang ist es ferner von Vorteil, wenn die Deckfläche der Grundanhebungen in radialer Richtung bis in eine Tiefe von 30% bis 50%, insbesondere von 35% bis 45%, der Tiefe der Rille reicht. Über derart ausgestaltete Grundanhebungen lässt sich außerdem Wasser sehr gut ab- bzw. weiterleiten, sodass gleichzeitig das Wasserableitvermögen der Rillen verbessert ist.

Im Hinblick auf das Wasserableitvermögen der Rillen ist es zudem vorteilhaft, wenn in den Grundanhebungen jeweils zumindest eine von der Deckfläche ausgehende Vertiefung ausgebildet ist, welche gegenüber dem Niveau der Deckfläche an ihrer tiefsten Stelle eine Tiefe von 1,0 mm bis 2,0 mm aufweist und eine in Erstreckungsrichtung der Rille ermittelte Länge von 1,5 mm bis 4,0 mm aufweist. Eine solche Vertiefung erhöht das Rillenleervolumen im Bereich der Grundanhebung.

Es ist zudem von Vorteil, wenn die Vertiefung(en), im Querschnitt durch die Rille betrachtet, durch einen U-förmigen Boden und eine vorzugsweise bis zur Laufstreifenperipherie reichende Flanke begrenzt ist bzw. sind, wobei die Flanke in radialer Richtung oder zu dieser unter einem Winkel von bis zu 3° verläuft. Solche Vertiefungen unterstützten zusätzlich die stabilisierende Wirkung der Grundanhebung.

Die abstützende Wirkung der Flanke der Vertiefung und damit auch der Grundanhebung lässt sich weiter verbessern, wenn die Flanke ausgehend vom Boden in radialer Richtung kontinuierlich schmäler wird.

Weitere bevorzugte Ausführungsvarianten befassen sich mit speziell symmetrisch bzw. doppelt-symmetrisch ausgeführten Grundanhebungen, welche Steifigkeitssprünge besonders deutlich reduzieren und das Wasserableitvermögen der Rillen weiter verbessern.

Bei einer solchen Ausführungsvariante sind die Grundanhebungen jeweils bezüglich einer ersten Ebene, welche von einer in Erstreckungsrichtung der Rille ausgerichteten Geraden und der radialen Richtung aufgespannt ist, symmetrisch ausgeführt.

Bevorzugter Weise ist dabei die Deckfläche der Grundanhebungen, in der ersten Ebene betrachtet, als Kreisbogen oder kreisbogenähnlich ausgeführt.

Ferner ist es günstig, wenn die Deckfläche der Grundanhebungen, in der ersten Ebene betrachtet, an ihren Enden bis in eine Tiefe reicht, welche 0,5 mm bis 1,0 mm geringer ist als die Tiefe der Deckfläche an ihrer tiefsten Stelle.

Ebenfalls ist es günstig, wenn die Grundanhebungen - jeweils ermittelt in der ersten Ebene sowie am Niveau des Rillengrundes der jeweiligen Rille - eine Länge von 4,0 mm bis 8,0 mm, insbesondere von 5,0 mm bis 7,0 mm, aufweisen.

Von weiterem Vorteil ist es in diesem Zusammenhang, wenn die Grundanhebungen jeweils bezüglich einer zweiten Ebene, welche orthogonal zur ersten Ebene verläuft, symmetrisch ausgeführt sind.

Die abstützende Wirkung ist weiter verbessert, wenn die Deckfläche der Grundanhebungen an ihren radial äußeren Enden in Draufsicht konvex zueinander gekrümmte Begrenzungskanten aufweist.

Gemäß einer weiteren bevorzugten Ausführungsvariante sind die beiden Stirnflächen der Grundanhebungen, in Draufsicht zueinander konkav gekrümmt. Solche Stirnflächen erstrecken sich zwischen den jeweiligen Rillenflanken und stützen diese besonders wirkungsvoll gegeneinander ab, unterstützen daher die stabilisierende Wirkung der Grundanhebungen.

Die erläuterten Wirkungen der Grundanhebungen sind besonders ausgeprägt und vorteilhaft, wenn der Winkel, unter welchem die Rillen mit den Grundanhebungen zur axialen Richtung verlaufen, 10° bis 60°, insbesondere 40° bis 55°, beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
- Fig. 1: eine Draufsicht auf einen Ausschnitt eines Laufstreifens eines Fahrzeugluftreifens,
- Fig. 2: eine vergrößerte Ansicht des Details Z₂ der Fig. 1,
- Fig. 3: einen Schnitt entlang der Linie III-III der Fig. 2,
- Fig. 4: einen Schnitt entlang der Linie IV-IV der Fig. 2 und
- Fig. 5: eine Schrägansicht gemäß der in Fig. 2 durch den Pfeil S₅ andeuteten Sichtrichtung.

Gemäß der Erfindung ausgeführte Fahrzeugluftreifen sind insbesondere Reifen in Radialbauart für Personenkraftwagen, Vans oder Light-Trucks.

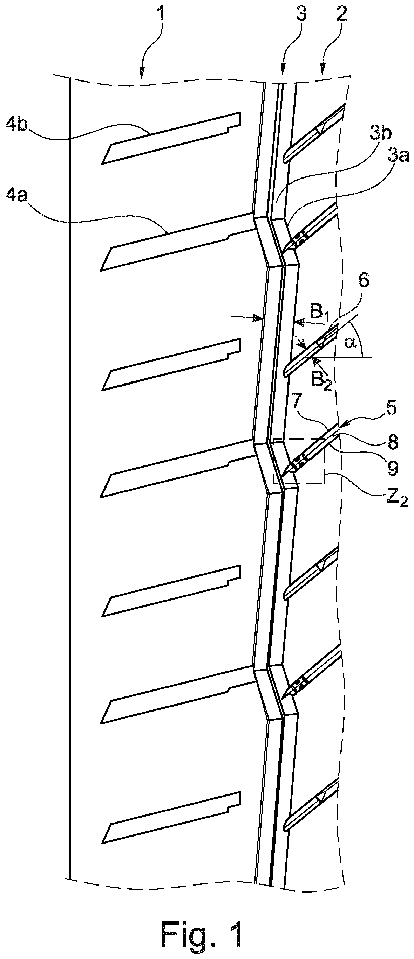

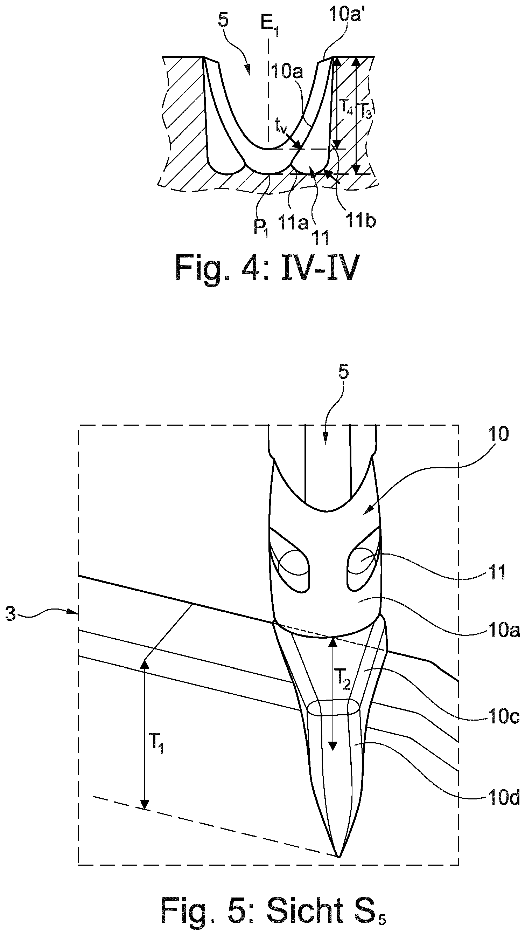

In Fig. 1 sind vom Laufstreifen des Fahrzugluftreifens eine schulterseitige Profilrippe 1, ein Teilbereich einer mittleren Profilrippe 2 und eine die Profilrippe 1 von der Profilrippe 2 trennende Umfangsrille 3 gezeigt. Die Umfangsrille 3 ist in radialer Richtung auf die jeweils vorgesehene Profiltiefe T₁ (Fig. 5) von üblicherweise 6,5 mm bis 10,0 mm ausgeführt, weist an der Laufstreifenperipherie eine Breite B₁ von insbesondere 6,0 mm bis 9,0 mm auf und setzt sich aus kurzen Rillenabschnitten 3a und gegenüber diesen länger ausgeführten langen Rillenabschnitten 3b zusammen, wobei jeweils ein Rillenabschnitt 3a abwechselnd auf einen Rillenabschnitt 3b folgt und die Rillenabschnitte 3a bezogen auf die Umfangsrichtung gegensinnig zu den Rillenabschnitten 3b geneigt sind. Die Rillenabschnitte 3a, 3b verlaufen zur Umfangsrichtung jeweils unter einem Winkel von vorzugsweise 5° bis 15°.

Die schulterseitige Profilrippe 1 ist mit einer Vielzahl von parallel zueinander verlaufenden Querrillen 4a, 4b versehen, wobei die Querrillen 4a jeweils in einen kurzen Rillenabschnitt 3a einmünden und die Querrillen 4b in einem Abstand vor den langen Rillenabschnitten 3b enden. Es folgt dabei jeweils eine Querrille 4a abwechselnd auf eine Querrille 4b.

Die mittlere Profilrippe 2 ist mit in die kurzen Rillenabschnitte 3a einmündenden Rillen 5 und mit in die langen Rillenabschnitte 3b einmündenden Rillen 6 versehen. Die Rillen 5, 6 verlaufen in Draufsicht zur axialen Richtung unter einem Winkel α von 40° bis 55°, weisen in radialer Richtung eine Tiefe T₂ (Fig. 5) von 70% bis 100%, beim gezeigten Ausführungsbeispiel von 100%, der Profiltiefe T₁ sowie an der Laufstreifenperipherie eine Breite B₂ von vorzugsweise 3,0 mm bis 6,0 mm auf. Die Rillen 5, 6 können die mittlere Profilrippe 2 durchqueren, innerhalb der mittleren Profilrippe 2 enden oder in weitere in der Profilrippe 2 ausgebildete Rillen einmünden.

Die einmünden Rillen 5, 6 sind jeweils durch einander gegenüberliegende Rillenflanken 7, einen Rillengrund 8 und an der Laufstreifenperipherie durch Rillenkanten 9 begrenzt. Die Rillenflanken 3 verlaufen, im Querschnitt betrachtet, zur radialen Richtung unter einen Winkel von vorzugsweise 0° bis 5°.

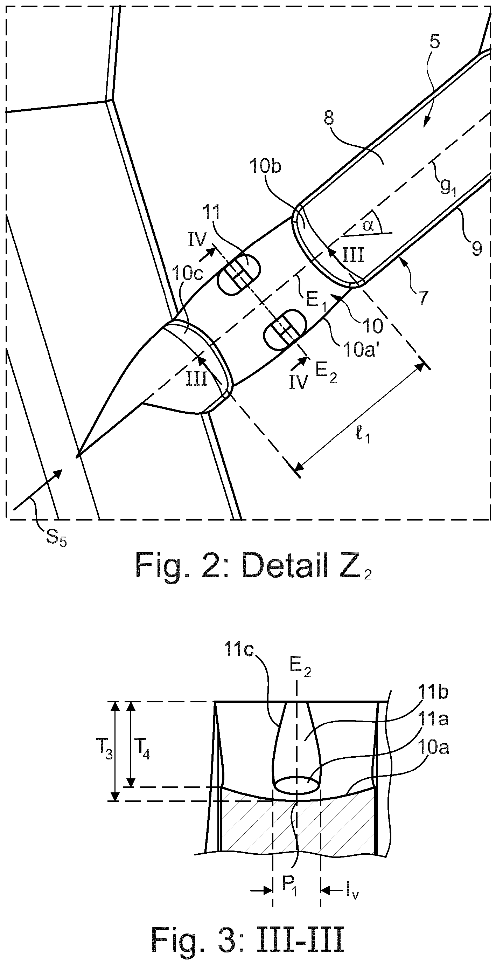

Wie insbesondere Fig. 2 und Fig. 5 zeigen, ist in jeder Rille 5 im an der Einmündung der Rille 5 angrenzenden Bereich eine am Rillengrund 8 aufsitzende, an die beide Rillenflanken 7 angebundene Grundanhebung 10 ausgebildet, welche die Tiefe der Rille 5 lokal verringert (Fig. 5). Die weitere Ausgestaltung der Grundanhebungen 10 wird nachfolgend anhand einer einzelnen Grundnahhebung 10 erläutert.

Gemäß Fig. 2 ist die Grundanhebung 10 bezüglich einer Ebene E₁, welche von der radialen Richtung und einer in Draufsicht unter dem bereits erwähnten Winkel α verlaufenden Geraden g₁ aufgespannt ist, sowie bezüglich einer orthogonal zur Ebene E₁ verlaufenden Ebene E₂ (fällt mit der Schnittlinie IV-V zusammen) symmetrisch ausgeführt. Die Grundanhebung 10 weist ermittelt in der Ebene E₁ an ihrer am Niveau des Rillengrundes 4 liegenden Basis eine Länge l₁ von 4,0 mm bis 8,0 mm, insbesondere von 5,0 mm bis 7,0 mm, auf. Wie Fig. 5 zeigt, ist die Grundanhebung 10 in radialer Richtung durch eine Deckfläche 10a begrenzt und weist ferner an die Deckfläche 10a anschließende Stirnflächen 10b, 10c (siehe auch Fig. 2) auf.

Die Stirnflächen 10b, 10c erstrecken sich jeweils zwischen den beiden Rillenflanken 7, verlaufen in radialer Richtung oder zu dieser unter einem Winkel von bis zu 5° und sind, in Draufsicht betrachtet, konkav zueinander gekrümmt. Die Stirnfläche 10b begrenzt die Grundanhebung 10 - bezogen auf die Rille 5 - rilleninnenseitig und verläuft zum Rillengrund 8. Bei der Einmündung der Rille 5 in die Umfangsrille 3 ist die Grundanhebung 10 durch die Stirnfläche 10c begrenzt, wobei an das radial innere Ende der Stirnfläche 10c eine in der Umfangsrille 1 auslaufende Einmündungsfläche 10d anschließt (Fig. 5).

Wie Fig. 3 in Kombination mit Fig. 4 zeigt, ist die Deckfläche 10a der Grundanhebung 10, sowohl im Querschnitt als auch im Längsschnitt der Rille 2 betrachtet, radial nach innen gekrümmt, wobei der tiefste Punkt P₁ der Deckfläche 10a dem auf der Deckfläche 10a liegenden Schnittpunkt der Ebene E₁ mit der Ebene E₂ entspricht (vergleiche Fig. 2). Die Deckfläche 10a reicht am tiefsten Punkt P₁ in radialer Richtung bis in eine Tiefe T₃ von 30% bis 50%, insbesondere von 35% bis 45%, der Tiefe T₂ der Rille 5 (Fig. 5). Gemäß Fig. 3 erscheint die Deckfläche 10a innerhalb der Ebene E₁ als Kreisbogen oder ist in dieser zumindest kreisbogenartig ausgeführt und reicht an ihren in der Ebene E₁ liegenden Enden bis in eine Tiefe T₄, welche 0,5 mm bis 1,0 mm geringer ist als die erwähnte Tiefe T₃. Gemäß Fig. 4 ist die Deckfläche 10a, im Querschnitt der Rille 5 betrachtet, durchgehend U-förmig gekrümmt und weist eine von ihren radial äußeren Enden zur Ebene E₁ zunehmende Krümmung auf. Unter der Krümmung wird dabei bekannter Weise der Kehrwert des Radius jenes Kreises verstanden, welcher an jeder gekrümmten Stelle dem Krümmungsverlauf am besten angenähert ist. Ferner verläuft die Deckfläche 10a, im Querschnitt der Rille 5 betrachtet, bis zur Laufstreifenperipherie und weist an dieser die Rillenkanten 9 mitbildende Begrenzungskanten 10a' auf (siehe auch Fig. 2). Wie Fig. 2 erkennen lässt, sind die Begrenzungskanten 10a', in Draufsicht betrachtet, zueinander leicht konvex gekrümmt. Alternativ kann die Deckfläche 10a radial innerhalb der Laufstreifenperipherie enden, wobei sie zu dieser in radialer Richtung einen Abstand von bis zu 2,0 mm aufweist.

Gemäß Fig. 5 sind beim gezeigten Ausführungsbeispiel in der Grundanhebung 10 zwei von der Deckfläche 10a ausgehende, in radialer Richtung in die Grundanhebung 10 hineinragende Vertiefungen 11 ausgebildet. Wie insbesondere Fig. 2 zeigt, sind die Vertiefungen 11, in Draufsicht betrachtet, in Erstreckungsrichtung der Rille 5 langgestreckt oval gestaltet, befinden sich an unterschiedlichen Seiten der Ebene E₁, sind daher bezüglicher der Ebene E₁ symmetrisch zueinander ausgebildet und sind ferner bezüglich der Ebene E₂ jeweils symmetrisch gestaltet. Gemäß Fig. 4 ist jede Vertiefung 11, im Querschnitt der Rille 5 betrachtet, durch einen U-förmigen Boden 11a und eine zur jeweiligen Begrenzungskante 10a verlaufende Flanke 11b begrenzt, wobei die Flanke 11b in radialer Richtung oder zu dieser unter einem Winkel von bis zu 3° verläuft. Wie Fig. 3 zeigt, wird die Flanke 11b ausgehend vom Boden 11a in radialer Richtung kontinuierlich schmäler. Am Niveau der Deckfläche 10a sind der Boden 11a und die Flanke 11b von einer gemeinsamen Begrenzungskante 11c begrenzt. Jede Vertiefung 11 weist - parallel zur Ebene E₁ sowie am Niveau der Deckfläche 10a ermittelt - eine Länge lᵥ von 1,5 mm bis 4,0 mm auf. Ferner weist jede Vertiefung 11 gegenüber dem Niveau der Deckfläche 10a an ihrer tiefsten Stelle eine Tiefe tᵥ (Fig. 4) von 1,0 mm bis 2,0 mm auf.

Die Erfindung ist auf das beschriebene Ausführungsbeispiel nicht beschränkt.

Insbesondere können die Grundanhebungen an beliebigen Stellen in den Rillen ausgebildet sein. Die Rillen können zur axialen Richtung unter einem Winkel von 0° bis 70°, insbesondere von 10° bis 60°, verlaufen. Die Grundanhebungen können daher in Querrillen (Winkel von 0° bis 45° zur axialen Richtung) oder in Schrägrillen (Winkel von größer 45° bis 70° zur axialen Richtung) ausgebildet sein.

### Bezugsziffernliste

- 1: schulterseitige Profilrippe
- 2: mittlere Profilrippe
- 3: Umfangsrille
- 3a: Rillenabschnitt
- 3b: Rillenabschnitt
- 4a: Querrille
- 4b: Querrille
- 5: Rille
- 6: Rille
- 7: Rillenflanke
- 8: Rillengrund
- 9: Rillenkante
- 10: Grundanhebung
- 10a: Deckfläche
- 10a': Begrenzungskante
- 10b, 10c: Stirnfläche
- 10d: Einmündungsfläche
- 11: Vertiefung
- 11a: Boden
- 11b: Flanke
- 11c: Begrenzungskante
- B₁, B₂: Breite
- E₁, E₂: Ebene
- g₁: Gerade
- l₁, lᵥ: Länge
- P₁: tiefster Punkt
- T₁: Profiltiefe
- T₂, T₃, T₄: Tiefe
- tᵥ: Tiefe
- α: Winkel

## Patentansprüche

1. Fahrzeugluftreifen mit einem profilierten Laufstreifen mit unter einem Winkel (α) von 0° bis 70° zur axialen Richtung verlaufenden Rillen (5) mit zwei Rillenflanken (7) und einem Rillengrund (8) und mit am Rillengrund (8) sitzenden, an die Rillenflanken (7) angebundenen Grundanhebungen (10), welche jeweils durch zwei Stirnflächen (10b, 10c) und in radialer Richtung durch eine Deckfläche (10a) begrenzt sind, wobei die Deckfläche (10a), im Querschnitt durch die jeweilige Rille (5) betrachtet, radial nach innen gekrümmt verläuft und entlang der Rillenflanken (7) entweder bis zur Laufstreifenperipherie reicht oder vor dieser in einem in radialer Richtung ermittelten Abstand von bis zu 2,0 mm endet,
**dadurch geknnzeichnet,**
dass die Deckfläche (10a) der Grundanhebungen (10), im Längsschnitt durch die jeweilige Rille (5) betrachtet, radial nach innen gekrümmt verläuft.

2. Fahrzeugluftreifen nach Anspruch 1, bei welchem mit Grundanhebungen (10) versehene Rillen (5) in eine weitere Rille (3), insbesondere eine Umfangsrille (3), einmünden, wobei die Grundanhebungen (10) unmittelbar an den Einmündungsbereichen der Rillen (5) zu der weiteren Rille (3) ausgebildet sind.

3. Fahrzeugluftreifen nach Anspruch 1 oder 2, **dadurch gekennzeichnet, dass** die Deckfläche (10a) der Grundanhebungen (10), im Querschnitt durch die jeweilige Rille (5) betrachtet, eine von ihren radial äußeren Enden zu ihrer tiefsten Stelle zunehmende Krümmung aufweist.

4. Fahrzeugluftreifen nach einem der Ansprüche 1 bis 3, **dadurch gekennzeichnet, dass** die Deckfläche (10a) der Grundanhebungen (10) in radialer Richtung bis in eine Tiefe (T₃) von 30% bis 50%, insbesondere von 35% bis 45%, der Tiefe (T₂) der Rille (5) reicht.

5. Fahrzeugluftreifen nach einem der Ansprüche 1 bis 4, **dadurch gekennzeichnet, dass** in den Grundanhebungen (10) jeweils zumindest eine von der Deckfläche (10a) ausgehende Vertiefung (11) ausgebildet ist, welche gegenüber dem Niveau der Deckfläche (10a) an ihrer tiefsten Stelle eine Tiefe (tᵥ) von 1,0 mm bis 2,0 mm und eine in Erstreckungsrichtung der Rille (5) ermittelte Länge (lᵥ) von 1,5 mm bis 4,0 mm aufweist.

6. Fahrzeugluftreifen nach Anspruch 5, **dadurch gekennzeichnet, dass** die Vertiefung(en) (11), im Querschnitt durch die Rille (5) betrachtet, durch einen U-förmigen Boden (11a) und eine vorzugsweise bis zur Laufstreifenperipherie reichende Flanke (11b) begrenzt ist bzw. sind, wobei die Flanke (11b) in radialer Richtung oder zu dieser unter einem Winkel von bis zu 3° verläuft.

7. Fahrzeugluftreifen nach Anspruch 6, **dadurch gekennzeichnet, dass** die Flanke (11b) ausgehend vom Boden (11a) in radialer Richtung kontinuierlich schmäler wird.

8. Fahrzeugluftreifen nach einem der Ansprüche 1 bis 7, **dadurch gekennzeichnet, dass** die Grundanhebungen (10) jeweils bezüglich einer ersten Ebene (E₁), welche von einer in Erstreckungsrichtung der Rille (2) ausgerichteten Geraden (g₁) und der radialen Richtung aufgespannt ist, symmetrisch ausgeführt sind.

9. Fahrzeugluftreifen nach Anspruch 8, **dadurch gekennzeichnet, dass** die Deckfläche (10a) der Grundanhebungen (10), in der ersten Ebene (E₁) betrachtet, als Kreisbogen oder kreisbogenähnlich ausgeführt ist.

10. Fahrzeugluftreifen nach Anspruch 9, **dadurch gekennzeichnet, dass** die Deckfläche (10a) der Grundanhebungen (10), in der ersten Ebene (E₁) betrachtet, an ihren Enden bis in eine Tiefe (T₄) reicht, welche 0,5 mm bis 1,0 mm geringer ist als die Tiefe (T₃) der Deckfläche (10a) an ihrer tiefsten Stelle.

11. Fahrzeugluftreifen nach einem der Ansprüche 8 bis 10, **dadurch gekennzeichnet, dass** die Grundanhebungen (10) - jeweils ermittelt in der ersten Ebene (E₁) sowie am Niveau des Rillengrundes (8) der jeweiligen Rille (5) - eine Länge (l₁) von 4,0 mm bis 8,0 mm, insbesondere von 5,0 mm bis 7,0 mm, aufweisen.

12. Fahrzeugluftreifen nach einem der Ansprüche 8 bis 11, **dadurch gekennzeichnet, dass** die Grundanhebungen (10) jeweils bezüglich einer zweiten Ebene (E₂), welche orthogonal zur ersten Ebene (E₁) verläuft, symmetrisch ausgeführt sind.

13. Fahrzeugluftreifen nach einem der Ansprüche 1 bis 12, **dadurch gekennzeichnet, dass** die Deckfläche (10a) der Grundanhebungen (10) an ihren radial äußeren Enden in Draufsicht konvex zueinander gekrümmte Begrenzungskanten (10a') aufweist.

14. Fahrzeugluftreifen nach einem der Ansprüche 1 bis 13, **dadurch gekennzeichnet, dass** die beiden Stirnflächen (10b, 10c) der Grundanhebungen (10), in Draufsicht zueinander konkav gekrümmt sind.

15. Fahrzeugluftreifen nach einem der Ansprüche 1 bis 14, **dadurch gekennzeichnet, dass** der Winkel (a), unter welchem die Rillen (5) mit den Grundanhebungen (10) zur axialen Richtung verlaufen, 10° bis 60°, insbesondere 40° bis 55°, beträgt.

## Claims

1. Pneumatic vehicle tyre comprising a profiled tread with grooves (5), which run at an angle (α) of 0° to 70° to the axial direction and have two groove flanks (7) and a groove base (8), and with base elevations (10), which sit on the groove base (8), are joined to the groove flanks (7) and are in each case delimited by two end faces (10b, 10c) and in the radial direction by a top face (10a), the top face (10a), when viewed in cross section through the respective groove (5), running in a radially inwardly curved manner and reaching along the groove flanks (7) either up to the periphery of the tread or ending before it at a distance of up to 2.0 mm, determined in the radial direction,
**characterized**
**in that** the top face (10a) of the base elevations (10), when viewed in cross section through the respective groove (5), runs in a radially inwardly curved manner.

2. Pneumatic vehicle tyre according to Claim 1, in which grooves (5) provided with base elevations (10) merge with a further groove (3), in particular a circumferential groove (3), the base elevations (10) being formed directly the at the merging regions of the grooves (5) with the further groove (3).

3. Pneumatic vehicle tyre according to Claim 1 or 2, **characterized in that** the top face (10a) of the base elevations (10), when viewed in cross section through the respective groove (5), has a curvature increasing from its radially outer ends to its deepest point.

4. Pneumatic vehicle tyre according to one of Claims 1 to 3, **characterized in that** the top face (10a) of the base elevations (10) reaches in the radial direction to a depth (T₃) of 30% to 50%, in particular of 35% to 45%, of the depth (T₂) of the groove (5).

5. Pneumatic vehicle tyre according to one of Claims 1 to 4, **characterized in that** in the base elevations (10) there is formed in each case a depression (11) which extends from the top face (10a) and has at its deepest point with respect to the level of the top face (10a) a depth (tᵥ) of 1.0 mm to 2.0 mm and a length (lᵥ), determined in the direction of extent of the groove (5), of 1.5 mm to 4.0 mm.

6. Pneumatic vehicle tyre according to Claim 5, **characterized in that** the depression(s) (11), when viewed in cross section through the groove (5), is or are delimited by a U-shaped bottom (11a) and a flank (11b) which preferably reaches up to the periphery of the tread, the flank (11b) running in the radial direction or at an angle of up to 3° thereto.

7. Pneumatic vehicle tyre according to Claim 6, **characterized in that**, from the bottom (11a), the flank (11b) becomes continuously narrower in the radial direction.

8. Pneumatic vehicle tyre according to one of Claims 1 to 7, **characterized in that** the base elevations (10) are in each case symmetrically designed with respect to a first plane (E₁), which is defined by a straight line (g₁), aligned in the direction of extent of the groove (2), and the radial direction.

9. Pneumatic vehicle tyre according to Claim 8, **characterized in that** the top face (10a) of the base elevations (10), when viewed in the first plane (E₁), is designed as an arc of a circle or similar to an arc of a circle.

10. Pneumatic vehicle tyre according to Claim 9, **characterized in that** the top face (10a) of the base elevations (10), when viewed in the first plane (E₁), reaches at its ends to a depth (T₄), which is 0.5 mm to 1.0 mm smaller than the depth (T₃) of the top face (10a) at its deepest point.

11. Pneumatic vehicle tyre according to one of Claims 8 to 10, **characterized in that** the base elevations (10) - determined in each case in the first plane (E₁) and at the level of the groove base (8) of the respective groove (5) - have a length (l₁) of 4.0 mm to 8.0 mm, in particular of 5.0 mm to 7.0 mm.

12. Pneumatic vehicle tyre according to one of Claims 8 to 11, **characterized in that** the base elevations (10) are in each case designed symmetrically with respect to a second plane (E₂), which runs orthogonal to the first plane (E₁).

13. Pneumatic vehicle tyre according to one of Claims 1 to 12, **characterized in that** the top face (10a) of the base elevations (10) has at its radially outer ends delimiting edges (10a') which in plan view are curved convexly in relation to one another.

14. Pneumatic vehicle tyre according to one of Claims 1 to 13, **characterized in that** the two end faces (10b, 10c) of the base elevations (10) are in plan view curved concavely in relation to one another.

15. Pneumatic vehicle tyre according to one of Claims 1 to 14, **characterized in that** the angle (α), at which the grooves (5) with the base elevations (10) run in relation to the axial direction, is 10° to 60°, in particular 40° to 55°.

## Revendications

1. Pneumatique de véhicule muni d'une bande de roulement profilée munie de rainures (5) s'étendant à un angle (α) de 0° à 70° par rapport à la direction axiale, munies de deux flancs de rainure (7) et d'un fond de rainure (8), et munies de surélévations de fond (10) situées sur le fond de rainure (8), reliées aux flancs de rainure (7), qui sont chacune délimitées par deux surfaces frontales (10b, 10c) et, dans la direction radiale, par une surface de recouvrement (10a), la surface de recouvrement (10a), telle que vue en coupe transversale à travers la rainure respective (5), s'étendant sous forme incurvée radialement vers l'intérieur et soit atteignant la périphérie de bande de roulement le long des flancs de rainure (7), soit se terminant avant celle-ci à une distance déterminée dans la direction radiale de jusqu'à 2,0 mm,
**caractérisé en ce que**
la surface de recouvrement (10a) des surélévations de fond (10), telle que vue en coupe longitudinale à travers la rainure respective (5), s'étend sous forme incurvée radialement vers l'intérieur.

2. Pneumatique de véhicule selon la revendication 1, dans lequel des rainures (5) pourvues de surélévations de fond (10) débouchent dans une autre rainure (3), en particulier une rainure circonférentielle (3), les surélévations de fond (10) étant formées directement sur les zones d'embouchure des rainures (5) vers l'autre rainure (3).

3. Pneumatique de véhicule selon la revendication 1 ou 2, **caractérisé en ce que** la surface de recouvrement (10a) des surélévations de fond (10), telle que vue en coupe transversale à travers la rainure respective (5), présente une courbure croissante depuis ses extrémités radialement extérieures jusqu'à son point le plus bas.

4. Pneumatique de véhicule selon l'une quelconque des revendications 1 à 3, **caractérisé en ce que** la surface de recouvrement (10a) des surélévations de fond (10) atteint, dans la direction radiale, une profondeur (T₃) de 30 % à 50 %, en particulier de 35 % à 45 %, de la profondeur (T₂) de la rainure (5) .

5. Pneumatique de véhicule selon l'une quelconque des revendications 1 à 4, **caractérisé en ce qu'**au moins un creux (11) partant de la surface de recouvrement (10a) est formé respectivement dans les surélévations de fond (10), lequel présente, par rapport au niveau de la surface de recouvrement (10a), à son point le plus bas, une profondeur (tᵥ) de 1,0 mm à 2,0 mm et une longueur (lᵥ) déterminée dans la direction d'extension de la rainure (5) de 1,5 mm à 4,0 mm.

6. Pneumatique de véhicule selon la revendication 5, **caractérisé en ce que** le ou les creux (11), tels que vus en coupe transversale à travers la rainure (5), est ou sont délimités par un fond en forme de U (11a) et un flanc (11b) atteignant de préférence la périphérie de bande de roulement, le flanc (11b) s'étendant dans la direction radiale ou formant par rapport à celle-ci un angle de jusqu'à 3°.

7. Pneumatique de véhicule selon la revendication 6, **caractérisé en ce que** le flanc (11b) se rétrécit en continu dans la direction radiale à partir du fond (11a).

8. Pneumatique de véhicule selon l'une quelconque des revendications 1 à 7, **caractérisé en ce que** les surélévations de fond (10) sont réalisées de manière symétrique respectivement par rapport à un premier plan (E₁) qui est défini par une droite (g₁) orientée dans la direction d'extension de la rainure (2) et la direction radiale.

9. Pneumatique de véhicule selon la revendication 8, **caractérisé en ce que** la surface de recouvrement (10a) des surélévations de fond (10), telle que vue dans le premier plan (E₁), est réalisée sous la forme d'un arc de cercle ou de manière analogue à un arc de cercle.

10. Pneumatique de véhicule selon la revendication 9, **caractérisé en ce que** la surface de recouvrement (10a) des surélévations de fond (10), telle vue dans le premier plan (E₁), atteint à ses extrémités une profondeur (T₄) qui est inférieure de 0,5 mm à 1,0 mm à la profondeur (T₃) de la surface de recouvrement (10a) à son point le plus bas.

11. Pneumatique de véhicule selon l'une quelconque des revendications 8 à 10, **caractérisé en ce que** les surélévations de fond (10) présentent, déterminée respectivement dans le premier plan (E₁) ainsi qu'au niveau du fond de rainure (8) de la rainure respective (5), une longueur (l₁) de 4,0 mm à 8,0 mm, en particulier de 5,0 mm à 7,0 mm.

12. Pneumatique de véhicule selon l'une quelconque des revendications 8 à 11, **caractérisé en ce que** les surélévations de fond (10) sont réalisées de manière symétrique respectivement par rapport à un deuxième plan (E₂) qui est orthogonal au premier plan (E₁).

13. Pneumatique de véhicule selon l'une quelconque des revendications 1 à 12, **caractérisé en ce que** la surface de recouvrement (10a) des surélévations de fond (10) présente, à ses extrémités radialement extérieures, des bords de délimitation (10a') incurvés de manière convexe l'un par rapport à l'autre en vue de dessus.

14. Pneumatique de véhicule selon l'une quelconque des revendications 1 à 13, **caractérisé en ce que** les deux surfaces frontales (10b, 10c) des surélévations de fond (10) sont incurvées de manière concave l'une par rapport à l'autre en vue de dessus.

15. Pneumatique de véhicule selon l'une quelconque des revendications 1 à 14, **caractérisé en ce que** l'angle (α) avec lequel les rainures (5) munies des surélévations de fond (10) s'étendent par rapport à la direction axiale est de 10° à 60°, en particulier de 40° à 55°.
